# EUROPEAN PATENT APPLICATION

(11) **EP 0 562 367 A1**
(43) Date of publication of application: **29.09.1993**
(21) Application number: 93103861.6
(22) Date of filing: 10.03.1993
(51) Int. Cl.: B62K 25/08

(54) **Improvements in front suspensions for motorcycles**

(30) Priority: 27.03.1992 IT MI920742
(71) Applicant: CAGIVA SERVICES S.p.A., I-21100 Varese (IT)
(72) Inventor: Felli, Giorgio, I-21040 Sumirago (Varese) (IT)
(74) Representative: Giambrocono, Alfonso, Dr. Ing.

(57) **Abstract**

A motorcycle (1) comprises a frame (2), a handlebar (3), a front wheel (4) and a rear wheel (5) provided with respective hubs (9) and known braking members (11), such as usual disc brakes. The frame (2) comprises two substantially parallel arms (21, 22) arranged laterally to the front wheel (4), said arms (21, 22) possessing means (23) for coupling and securing shock absorber means (31), these latter being associated with support means (39) carried by the front wheel (4), said support means (39) allowing the wheel (4) to be steered while maintaining the shock absorber means (31) in a fixed position relative to the frame (2), transmission means (61) being provided associated with the wheel (4) and connected to the handlebar (3) to enable said wheel steering to be achieved by rotating said handlebar (3) about a usual steering axis (S).

## Description

This invention relates to a motorcycle of the type comprising a frame, a handlebar rotating about a steering axis, front and rear wheels provided with respective hubs and known braking members, and front and rear suspensions.

With particular reference to the front suspensions, various constructions are known, such as the usual fork or single-arm suspensions. In the case of fork or sinking-type suspensions, the damping members (forks) are generally associated with at least one support plate fixed to the steering head tube forming part of the motorcycle frame.

Although this known suspension adequately satisfies its purpose it has various drawbacks. In particular the suspension is not very rigid because of the distance between the support plate and the usual wheel axle. This can lead to obvious known problems during the use of the motorcycle, particularly for drivers or users with little driving practice.

In addition, this known suspension results in a raising of the centre of gravity of the vehicle, leading to obvious stability and handling problems.

An, object of the present invention is to provide a motorcycle of the stated type comprising a suspension particularly of the sinking type which provides considerable steering rigidity and hence improved accuracy in controlling the steering, greater driving accuracy during braking and improved response (ie more direct than known constructions) during steering under all driving conditions.

A further object is to provide a suspension of the stated type which results in lowering of the motorcycle centre of gravity, with consequent increased manageability during driving, and increased stability.

A further object is to provide a suspension of the stated type which enables a cowling to be formed for the motorcycle which is of such a shape as to improve the aerodynamic behaviour of the motorcycle while at the same time improving radiator cooling and reducing the vehicle fuel consumption.

These and further objects which will be more apparent to the expert of the art are attained by a motorcycle of the stated type, characterised in that the frame comprises two substantially parallel arms arranged laterally to the front wheel, said arms possessing means for coupling and securing shock absorber means, these latter being associated with support means carried by the front wheel, said support means allowing the wheel to be steered while maintaining the shock absorber means in a fixed position relative to the frame, transmission means being provided associated with the wheel and connected to the handlebar to enable said wheel steering to be achieved by rotating said handlebar about a usual steering axis.

The present invention will be more apparent from the accompanying drawing, which is provided by way of non-limiting example and in which:
Figure 1 is a perspective view of a motorcycle constructed in accordance with the invention, with some parts removed for greater clarity;
Figure 2 is a side view of the frame of the motorcycle of Figure 1;
Figure 3 is a plan view of the frame of Figure 2;
Figure 4 is an enlarged detailed view of a part of the motorcycle of Figure 1;
Figure 5 is a side view of a different embodiment of the motorcycle of Figure 1 with some parts omitted for greater clarity;
Figure 6 is a front view of the motorcycle of Figure 5 with some parts omitted and others shown in section for greater clarity;
Figure 7 is a perspective view of a front part of a different embodiment of the motorcycle of Figure 1;
Figure 8 is a schematic side view of a further embodiment of the motorcycle of the invention;
Figure 9 is a partly sectional front view of the motorcycle of Figure 8, with some parts omitted for greater clarity;
Figure 10 is a perspective view of the motorcycle of Figure 8 with some parts omitted for greater clarity; and
Figure 11 is a section on the line 11 of Figure 8 through a part of the motorcycle shown in this latter figure.

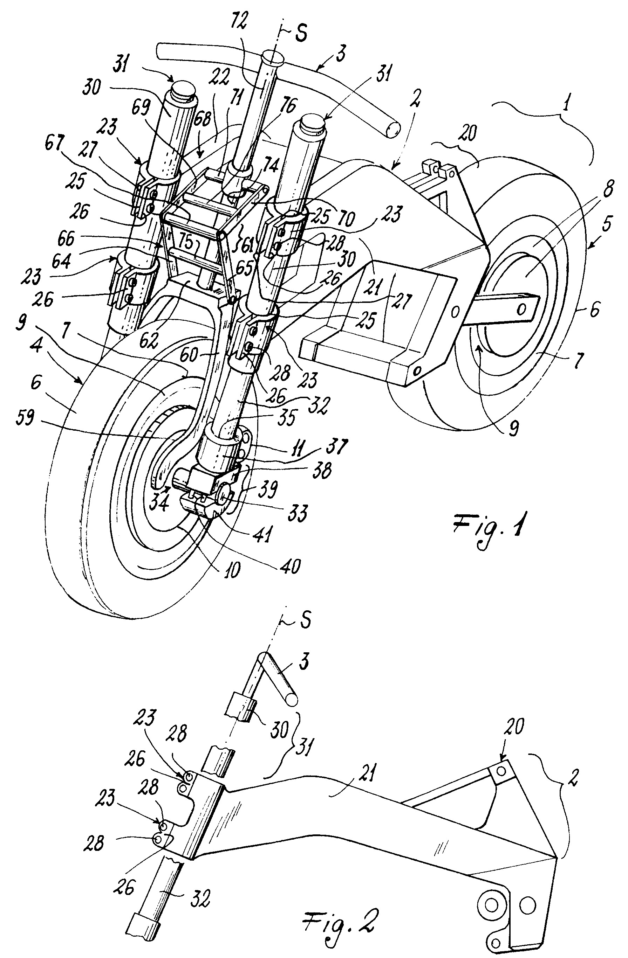

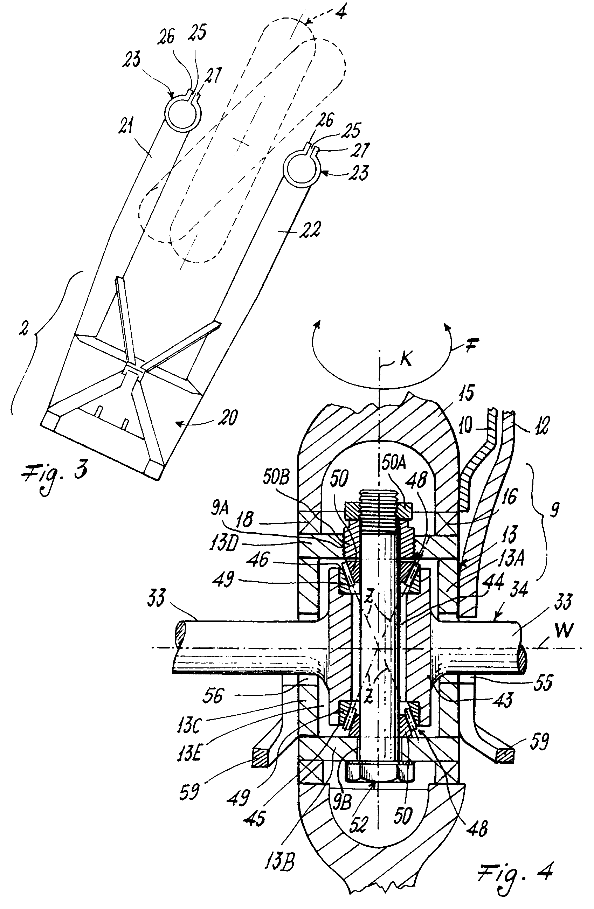

With reference to Figures 1 to 4, a motorcycle according to the invention is indicated overall by 1 and comprises a frame 2, a handlebar 3 rotatable about a steering axis S, a front wheel 4 and a rear wheel 5. Each wheel comprises a tyre 6 associated with a wheel rim 7 supported by known spokes (or similar elements) 8 associated with a hub 9. Each wheel 4 and 5 also comprises usual braking members. Specifically, the front wheel comprises a usual disc 10 associated with the hub 9 and cooperating with a usual brake caliper (or similar member) 11 supported by an arm 12 connected to a portion 13 of the hub 9. About this (fixed) portion of the hub there rotates a second portion 15 to which the spokes 8 are connected in known manner. Relative rotation between the portions 13 and 15 is achieved by usual bearings 16 or similar decoupling members.

The frame 2 comprises a substantially terminal portion 20 supporting a usual motorcycle saddle (not shown). From this portion there extend two parallel arms 21 and 22 each terminating with two overlying end parts 23 of clamp form. The parts 23 are substantially in the form of a cylinder split longitudinally at 25 and comprise opposing flanges 26 and 27 in proximity to the split 25. The flanges 26 and 27 are arranged to cooperate with at least bolts 28 (or similar members) which when tightened draw the flanges together to clamp the end parts 23 of the arms 21 and 22.

Each pair of overlying parts 23 is arranged to cooperate with the jacket 30 of a shock absorber 31 of any known type. This jacket is clamped and fixed between said parts, and houses a moving element or piston 32 associated with a portion 33 of a wheel axle 34 received in the hub 9 (or rather in the fixed portion 13 thereof). The two members 31 therefore define a fork for the front wheel 4 of the motorcycle 1.

In this respect, the free end 35 of each piston 32 is associated with a cylindrical element 37 of a portion 38 of a clamping member 39 which is clamped in any known manner (for example by bolts 40) onto the portion 33 of the wheel axle 34. For this purpose, each clamping member 39 comprises a second portion 41 arranged to cooperate with the portion 38 so as to tighten onto the wheel axle 34. In this manner the corresponding shock absorber 31 becomes connected to the axle 34.

This latter comprises an enlarged central portion 43 housed within the hub 9. The portion 43 comprises a through hole 44 opening at the outer surface of the axle 34 as two opposing openings 45 and 46. Decoupling members (such as roller bearings 48) are provided in these openings. The decoupling members or bearings 48 have their rollers arranged with their axis Z inclined to and intersecting the axis K of the hole 44. Specifically, one portion 49 of these bearings is associated with the wheel axle 34 whereas the other portion 50 is associated with a screw (or similar member) 52 positioned in the through hole 44 and cooperating with a nut 50A. This screw cooperates with the portion 13 of the hub 9; this latter comprises at least four parts 13A, 13B, 13C and 13D defining a box body the inner cavity 13E of which contains the portion 43 of the axle 34. Said parts 13A, B, C, D are held together by the screw 52 and other connection members (screws), not shown. The parts (13A and 13C) traversed by the wheel axle 34 comprise through holes 55 and 56 through which the portions 33 of this axle pass. An externally threaded bush 50B is inserted into a threaded seat 9A in the part 13D of the hub 9 to cooperate with this latter part. This bush acts as a regulator and compensator for the clearance between the bearings 48 and the parts connected to them.

The part 13B also has a through seat or hole 9B to receive the screw 52.

With the portion 13B of the hub 9 there is also associated at least one support 59 for a corresponding arm 60 to which a steering transmission 61 connected to the handlebar 3 is connected. In the figures under examination there are two arms 60 arranged on the two sides of the wheel 5 and connected to a member 62 arranged transversely to the direction of movement of the wheel 4. To this member there are hinged opposing arms 64, 65 of a first parallelogram or quadrilateral frame 66, of which the member 62 forms another side. To a last arm 67 of the quadrilateral 66 there is hinged a second quadrilateral 68, of which the arm 67 forms part. The frames 66 and 68 define a triple-articulation arch. The second quadrilateral 68 has opposing arms 69, 70 connected to said arm 67 and a last arm 71 connected to a support 72 for the handlebar 3. The support 72 is torsionally associated with a bar 74 connected to said member 62, said support 72 being able to slide longitudinally along said bar 74. Advantageously the support 7 and the bar 74 are portions of a (steering) shock absorber associated with the handlebar 3. It should be noted that the quadrilaterals 66 and 68 are arranged converging on the common arm 67 and are hinged together and to the member 62 and arm 71 respectively. Finally, these quadrilaterals each comprise a further stiffening arm 75 and 76 (parallel to the arm 67).

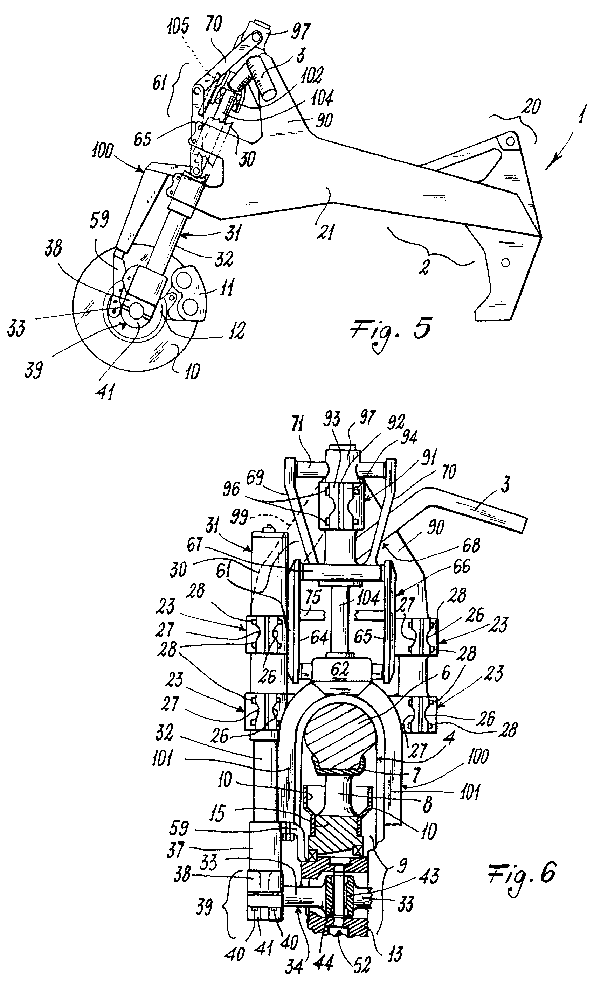

During the use of the motorcycle the shock absorbers 31 remain always fixed and rigid with the frame (ie they do not steer with the wheel 4). This is because the wheel axle 34 associated with the portion 13 of the hub 9 does not change its spatial attitude relative to the frame 2. This is achieved by virtue of the bearings 48 positioned between said portion 13 and the portion 43 of the axle 34. In this respect, steering the wheel 4 also involves movement (rotary about the axis K or in a plane perpendicular to that containing the axis of rotation W of the wheel 4) of the portion 13 of the hub 9 (arrow F, Figure 4). Specifically, this portion rotates on the bearings 48 about the screw 52 on steering the wheel by operating the handlebar 3. The action of the handlebar on the wheel is precise and direct because of the steering transmission 61. In addition the presence of the quadrilaterals or parallelograms 66 and 68 and of the bar 74 and support 72 provide stability to the steering transmission 61.

In this respect, as the parallelograms 66, 68 define a triple-articulation arch they close one onto the other while the support 72 slides on the bar 74. As these latter form part of a shock absorber, any stresses transmitted by the wheel to the handlebar 3 are damped and not transmitted to the user.

A modified embodiment of the motorcycle is shown in Figures 5 and 6 in which parts corresponding to those of Figures 1 to 4 are indicated by the same reference numerals.

In these figures the frame 2 comprises at least one support 90 extending from one of the two arms 21, 22 towards the handlebar 3 and terminating with a portion 91 of clamp form; this is substantially in the form of a cylinder split longitudinally at 92 and provided with opposing flanges 93, 94 at the split. The flanges 93, 94 can be pulled together by bolts (or similar members) 96 passing through the flanges so that when tightened they clamp the portion 91 about a substantially cylindrical part 97 to which the handlebar 3 is connected. The articulated quadrilateral (or substantially such) is connected to this part above the portion 91 (with reference to Figures 5 and 6) and is also connected to the quadrilateral 66 closer to the wheel 4.

In the example under consideration the part 97 is connected by said parallelograms to a fork member 100 comprising arms 101 associated with the portion 13 of the hub 9 via the support 59 and with the member 62 of the quadrilateral 66. The part 97 is associated with a bar 104 relative to which it can move longitudinally and can rotate on bearings 102 located between it and said bar. The presence of this later provides steering stability, and by defining a triple-articulation arch the quadrilaterals frames 66 and 68 damp the stresses generated on the handlebar during the use of the motorcycle. Advantageously, a small shock absorber 105 (shown by dashed lines in Figure 5) can be positioned between said quadrilateral frames to improve stress absorption by the steering transmissions 61.

The use of the front suspension shown in the figures is identical to that of the suspension represented in Figures 1 to 4, and is therefore not further described.

In a modification, the portion 91 is associated with two supports 90 and 99 (shown by dashed lines in Figure 6) symmetrically extending from the arms 21 and 22 of the frame 2.

Figure 7 shows a further modification of the invention. In this figure parts corresponding to those of the preceding figures are indicated by the same reference numerals.

In the figure under examination, the shock absorbers 31 are connected together by a steering plate 121 through a hole 121 of which there passes a shaft 122 connected to the handlebar (not shown); the hole contains a bearing 123 keyed onto the shaft 122 to facilitate the rotation of this latter relative to the plate 120. The shaft 122 is rigid with a projection 125 connected (or rather hinged) to a connecting bar 126 hinged to a projection 127 from a member 128 arranged along the jacket 30 of at least one shock absorber 31.

The member 128 comprises annular portions 130 extending from a portion 132 arranged to the side of said jacket. The jacket 130 is positioned between the portions 130.

The portion 132 supports portions 135 lying parallel to each other and connected together by a rod 136 (parallel to the member 128) with which there is slidingly associated one end 137 of an arm 138, which is connected at its other end 139 to a pin 140 rigid with a body 141 positioned along the periphery of the wheel 4 and connected to the portion 13 of the hub 9 via at least one support 59 fixed to the hub 9. The ends 137 and 139 of the arm 138 can rotate about the rod 136 and pin 140 respectively. Moreover the body 141 can be the usual mudguard associated with the wheel 4.

Consequently in the figure under examination the steering transmission 61 is implemented by means different from those described heretofore.

In this respect, in this embodiment the rotation of the shaft 122 (achieved by operating the handlebar) results in rotation of the member 128 about the corresponding shock absorber 31 (arrow N) by virtue of the cooperation between the connecting bar 126 and the projections 125 and 127. At the same time this rotation causes the arm 138 to rotate about the rod 136 with consequent movement of the body 141, which steers the wheel 4.

A steering shock absorber of known type can be advantageously associated with the plate 120.

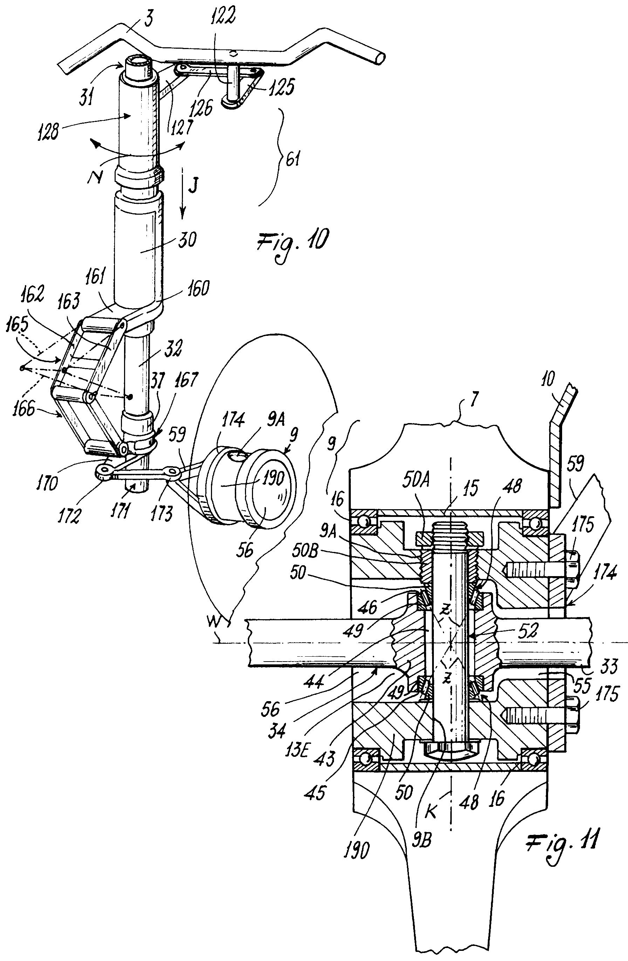

A further embodiment of the invention is shown in Figures 8 to 11. In these figures, parts corresponding to those of the previously described figures are indicated by the same reference numerals.

In the figures under examination the member 128 receives substantially the entire jacket 30 of at least one shock absorber 31 and part of the moving piston 32 thereof.

At that end 160 distant from the handlebar 3 this member comprises a projection 161 to which there are hinged the arms 162 and 163 of a first parallelogram or quadrilateral frame 165 hinged to a second parallelogram or quadrilateral frame 166 (together defining a triple-articulation arch); this latter is connected to a member 167 which is rigid with the cylindrical element 37 of the clamping member 39 but is made movable about it in any known manner.

The member 167 comprises a projection 170 to which there is hinged one end 172 of a bar 171 hinged at its other end 173 to the support 59 associated with a disc 174 fixed by screws 175 to the hub 9.

This latter comprises a one-piece body 190 (corresponding to the previously described fixed portion 13) having an inner cavity 13E communicating with the outside of the hub via holes 55 and 56. These latter have different cross-sections to enable the wheel axle 34 to be inserted into the hub, in which it is locked by the screw 52. This latter cooperates with the holes 9A and 9B provided coaxially within the one-piece body 190 of the hub 9.

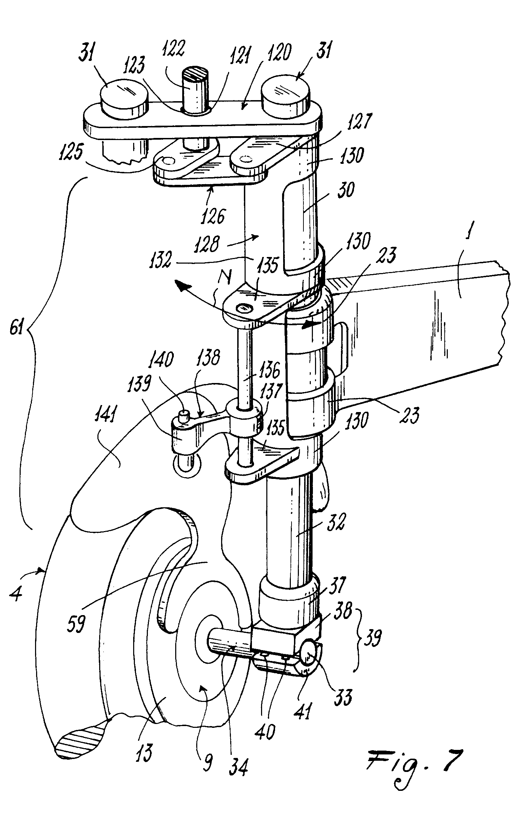

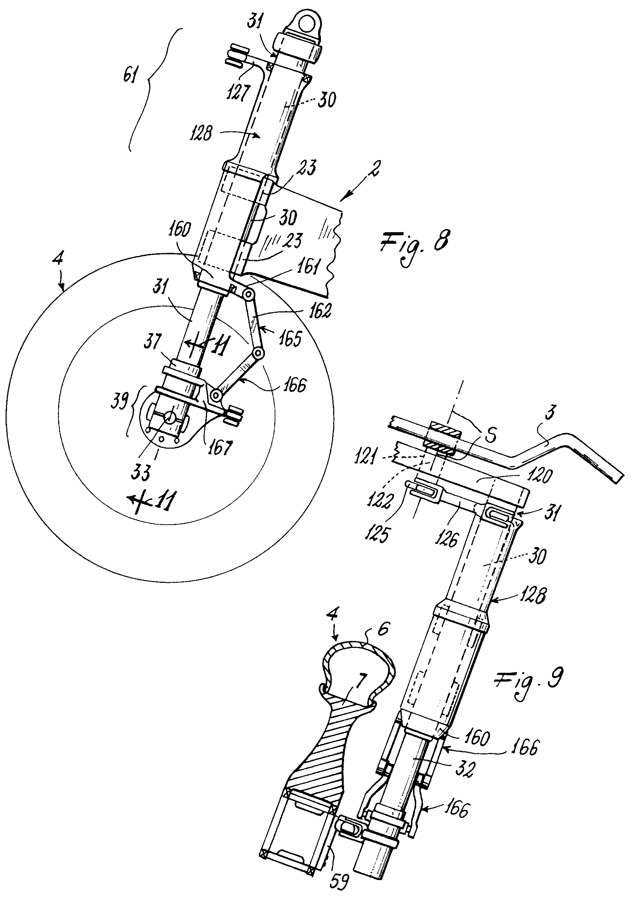

The use of the motorcycle in the form described in Figures 9 to 11 is very similar to that of the embodiments of the previously described figures. Specifically, during the use of the vehicle the member 128 can move (in the direction of the arrow J of Figure 10) together with the member 31 with which it is associated. In this manner the parallelogram frames 165 and 166 are able to move into the positions shown dashed in Figure 10. On steering the wheel, the member 128 rotates in the direction of the arrows N (as already described in relation to Figure 7). This rotation results in rotation of the hub body 190 by the action of the bar 171 connected to the projection 170 on the member 167 rotating about the element 37 of the member 39.

This rotation also results in rotation of the wheel 4. However the wheel axle 34 does not rotate, because of the presence of the bearings 48 interposed between the body 190 of the hub 9 (or rather between the screw 50 rigid with said body) and the wheel axle 34.

Various embodiments of the invention have been described. However further embodiments are possible, to be considered as falling within the scope of the present document.

## Claims

1. A motorcycle of the type comprising a frame, a handlebar rotating about a steering axis, a front and rear wheel provided with respective hubs and known braking members, such as usual disc brakes, and front and rear suspensions, characterised in that the frame (2) comprises two substantially parallel arms (21, 22) arranged laterally to the front wheel (4), said arms (21, 22) possessing means (23) for coupling and securing shock absorber means (31), these latter being associated with support means (39) carried by the front wheel (4), said support means (39) allowing the wheel (4) to be steered while maintaining the shock absorber means (31) in a fixed position relative to the frame (2) during this steering, transmission means (61) being provided associated with the wheel (4) and connected to the handlebar (3) to enable said wheel steering to be achieved by rotating said handlebar (3) about a usual steering axis (S).

2. A motorcycle as claimed in claim 1, characterised in that the coupling means are in the form of clamp-type ends (23) each arranged to clamp onto a jacket (30) of the shock absorber means (31), within said jacket (30) there moving a movable member or piston (32) associated with a corresponding portion (33) of a wheel axle (34) via the support means (39).

3. A motorcycle as claimed in claim 2, characterised in that the support means are a member (39) for connection to a portion (33) of the wheel axle (34) and comprising a seat (37) for the movable piston (32) of the shock absorber means (31).

4. A motorcycle as claimed in claim 3, characterised in that the member (39) defining the support means comprises two parts (38, 41) to be tightened towards each other in order to clamp it to the wheel axle (34), one of said parts (38) comprising the seat for the movable piston (32) of the shock absorber means (31).

5. A motorcycle as claimed in claim 2, characterised in that the wheel axle (34) is associated with the hub (9) of the motorcycle (1), said hub (9) comprising a portion (15) rigid with the usual tyre (6) of the wheel (4) and rotating therewith, and a fixed or non-rotating portion (13, 190) associated with the wheel axle (34).

6. A motorcycle as claimed in claim 5, characterised in that that portion (13) of the hub (9) associated with the wheel axle rotates about an axis (K) perpendicular to the axis of rotation (W) of the wheel (4) during the steering of this latter, decoupling means (48) being provided to allow this rotation of said portion (13) relative to the wheel axle (34), which remains fixed.

7. A motorcycle as claimed in claim 6, characterised in that that hub portion (13) which does not rotate with the wheel type (6) and is associated with the wheel axle (34) comprises a seat (13E) housing an enlarged portion (43) of the wheel axle (34), this latter portion comprising a through hole (44) opening (at 45, 46) at the outer surface of that portion (43) and housing a threaded member (52) cooperating with and rigid with opposing parts (13B, 13D) of the fixed portion (13) of the hub (9), in said openings (45, 46) of said through hole (44) there being provided mechanical decoupling members (48) cooperating with said threaded member (52), said hub portion (13) being able to rotate about this latter.

8. A motorcycle as claimed in claim 6, characterised in that that hub portion associated with the wheel axle (34) comprises a one-piece body (190) containing a seat (13E) housing an enlarged portion (43) of the wheel axle (34) and opening at the outer surface of said body via two openings (45, 46) of different diameter, said body (190) comprising seats (9A, 9B) for a threaded member (52) arranged in a through hole (44) in said enlarged portion (43), in the openings (45, 46) of said through hole (44) there being provided mechanical decoupling members (48) cooperating with said threaded member (52), about which the one-piece body (190) of the hub (9) is able to rotate.

9. A motorcycle as claimed in claims 7 and 8, characterised in that the mechanical decoupling members (48) are bearings preferably of roller type, the rollers being arranged with their axes (Z) inclined to and cutting the axis (K) of the threaded member (52) about which the hub portion (13) rotates.

10. A motorcycle as claimed in claims 1 and 5, characterised in that that hub portion (13, 190) associated with the wheel axle (34) carries connection means (59) for the transmission means (61) associated with the wheel (4) and handlebar (3).

11. A motorcycle as claimed in claim 10, characterised in that the connection means are at least one support (59) fixed to a corresponding arm (60) operationally connected to the handlebar (3).

12. A motorcycle as claimed in claims 1 and 10, characterised in that the transmission means are a steering transmission (61) comprising a handlebar support (72, 97) associated with a bar (74, 104) connected to a member (62) receiving two arms (60, 101) defining a fork arranged about the wheel (4) and rigid with the fixed part (13) of the hub (9) via corresponding supports (59), said member (62) defining one side of a first quadrilateral frame (66) in which the side opposite that defined by said member (62) is in common with a second quadrilateral frame (68) movable relative to the first and connected to the handlebar support (72, 97), said quadrilateral frames (66, 68) being inclined to each other and converging into the common side, and defining a triple-articulation arch.

13. A motorcycle as claimed in claim 12, characterised in that the handlebar support (72) and the corresponding bar (74) are part of a steering shock absorber member.

14. A motorcycle as claimed in claim 13, characterised in that a shock absorber member (105) is provided between the quadrilateral frames (66, 68).

15. A motorcycle as claimed in claim 10, characterised in that the transmission means are a steering transmission (61) comprising a member (128) positioned along at least one shock absorber member (31), said transmission (61) comprising mechanical connections (126, 138) to a shaft (122) supporting the handlebar (3) and, respectively, to an element (141) associated with the support (59) connected to that hub part (13) associated with the wheel axle (34).

16. A motorcycle as claimed in claim 15, characterised in that the shaft (122) supporting the handlebar (3) rotates in a seat (121) in a steering plate (120) carried by the shock absorber members (31), said shaft (122) carrying a projection (125) connected by a connection link (126) to another projection (127) rigid with the member (128) positioned along the shock absorber member (31), there being secured to a rod (136) carried by the member (128) and parallel thereto an arm (138) acting on a pin carried by the element (141) associated with the support (59) connected to the hub (9), said arm being able to rotate about and slide along said rod (136).

17. A motorcycle as claimed in claim 10, characterised in that the transmission means are a steering transmission (61) comprising a member (128) positioned along at least one shock absorber member (31), said transmission (61) comprising mechanical connections (126, 171) to a shaft (122) supporting the handlebar (3) and, respectively, to a disc (174) rigid with that hub part (190) associated with the wheel axle (34).

18. A motorcycle as claimed in claim 17, characterised in that the shaft (122) supporting the handlebar (3) rotates in a seat (121) in a steering plate (120) carried by the shock absorber members (31), said shaft (122) carrying a projection (125) connected by a connection link (126) to another projection (127) rigid with the member (128) positioned along the shock absorber member (31), this latter being connected at one end (160) to a first quadrilateral frame (165) hinged to a second quadrilateral frame (166) connected to a member (167) to which there is hinged one end (172) of a bar (171), the other end of which is hinged to a support element (59) connected to a disc (174) rigid with the hub (9), said quadrilateral frames (165, 166) defining a triple-articulation arch.
